# EUROPÄISCHE PATENTSCHRIFT

(11) **EP 2 294 956 B1**
(45) Veröffentlichungstag und Bekanntmachung des Hinweises auf die Patenterteilung: **06.08.2014**
(21) Anmeldenummer: 10401156.4
(22) Anmeldetag: 06.09.2010
(51) Int. Cl.: A47J 47/00

(54) **Schneidbrett für Haushaltszwecke**
Cutting board for domestic use
Planche à découper pour l'usage ménager

(30) Priorität: 15.09.2009 DE 102009044007
(43) Veröffentlichungstag der Anmeldung: 16.03.2011
(73) Patentinhaber: Miele & Cie. KG, 33332 Gütersloh (DE)
(72) Erfinder: Horsmann, Udo, 33334 Gütersloh (DE); Henkenjohann, Michael, 33330 Gütersloh (DE)

(56) Entgegenhaltungen:
- DE-U1-202006 016 445
- JP-A- 2003 125 956
- JP-U- 54 019 161
- JP-U- 60 002 444

## Beschreibung

Die Erfindung bezieht sich auf ein Schneidbrett für Haushaltszwecke nach dem Oberbegriff von Anspruch 1.

Schneidbretter für Haushaltszwecke sind in verschiedenen Ausführungsformen bekannt. Sie bestehen aus unterschiedlichen Materialien und unterscheiden sich in ihrer Form und Größe. Ein Einheitsmerkmal der Schneidbretter ist darin zu sehen, dass sie eine plane Oberfläche zum Schneiden oder sonstigen Bearbeiten von Lebensmitteln, wie z.B. Fleisch, Gemüse, Kräuter, Obst, Brotwaren und anderer Lebensmittel aufweisen. Übliche Schneidbretter bieten die Möglichkeit, das geschnittene bzw. bearbeitete Lebensmittel in einem Randbereich zu lagern. Andere Ausführungsformen sehen unterhalb der Schneidfläche verschiebbar gelagerte Auffangschalen vor, damit über die jeweilige Schmalseite der Schneidoberfläche entweder das geschnittene Lebensmittel oder die anfallenden Abfälle entsorgt werden können.

Aus der DE 20 2006 016 445 U1 ist ein Schneidbrett bekannt, das eine unterhalb der Schneidfläche angeordnete Schublade zum Aufnehmen von Abfall aufweist. Diese Schublade ist verschiebbar gelagert und ist vollständig aus der Lagerung herausziehbar, um den während des Schneidevorgangs anfallenden Abfall mittels der Schublade zu einem Abfallbehälter befördern und entsorgen zu können. Eine weitere Ausführungsform eines Schneidbrettes mit einer unterhalb der Schneidfläche angeordneten Schublade ist aus der JP-U-602444 bekannt. Eine weitere Ausführungsform eines Schneidbrettes mit drei unterhalb der Schneidfläche angeordneten Schubladen ist aus der JP-U-5419161 bekannt.

Nachteilig ist, dass gemäß Stand der Technik die Schubladen zum Aufnehmen von Abfall bzw. Schneidgut stets an das jeweilige Schneidbrett angepasst sind. Dadurch muss einerseits das Schneidgut für die anschließende weitere Zubereitung nochmals umgefüllt werden. Andererseits können keine anderen Behälter zum Aufnehmen von Abfall bzw. Schneidgut zusammen mit dem Schneidbrett verwendet werden.

Demgemäß liegt der Erfindung die Aufgabe zugrunde, ein Schneidbrett derart weiterzuentwickeln, das einen einfachen Aufbau aufweist und dennoch den beschriebenen Nachteilen Rechnung trägt und insbesondere der Zeitaufwand beim Arbeiten mit einem Schneidbrett verringert werden kann.

Die Aufgabe wird gelöst durch die Merkmale des unabhängigen Anspruchs 1. Weitere vorteilhafte Ausgestaltungen der Erfindungen ergeben sich aus den weiteren Unteransprüchen.

Indem das erfindungsgemäße Schneidbrett wenigstens zwei Abstandselemente unterhalb der Schmalseiten der Schneidfläche aufweist und die Abstandselemente jeweils zwei sich gegenüberliegende Führungsnuten zur Aufnahme von wenigstens zwei Auffangbehälter aufweisen, besteht der Vorteil, dass über die Breitseite der Schneidfläche das fertige Schnittgut wie auch der Abfall in einem Auffangbehälter befördert werden kann, ohne dass Schnittgutteile oder Teile des Abfalls neben den Auffangbehälter fallen. Um einen konstruktiv einfachen Aufbau des Schneidbretts realisieren zu können, verlaufen die jeweils sich gegenüberliegenden Führungsnuten zur Aufnahme der Auffangbehälter in paralleler Richtung zur Schneidfläche.

Um die Weiterbehandlung des Schnittgutes und das Entsorgen des Abfalls besonders einfach gestalten zu können, sind die in den Führungsnuten aufgenommenen Auffangbehälter von dem Schneidbrett vollständig entkoppelbar.

In einer vorteilhaften Weiterbildung der Erfindung sind die Führungsnuten ausgebildet und in einem solchen Abstand zueinander angeordnet, dass sie standardisierte in handelsüblichen Haushaltgeräten, insbesondere Dampfgarer, Verwendung findende Garbehälter aufnehmen können, so dass der Benutzer des Schneidbretts das fertige Schnittgut in den unterhalb der Schneidfläche angeordneten Behälter befördern kann und direkt ohne einen weiteren Umfüllprozess vornehmen zu müssen, das fertige Schnittgut in das Haushaltgerät zur weiteren Behandlung geben kann.

Dadurch, dass die unterhalb der Schneidfläche angeordneten Abstandselemente lösbar mit dieser verbunden sind, ist in vorteilhafter Weiterbildung der Erfindung eine optimale Reinigung des Schneidbretts gewährleistbar. Die lösbare Verbindung wird in vorteilhafter Weise mittels einer Schwalbenschwanzverbindung realisiert.

In einer vorteilhaften Weiterbildung der Erfindung weist die Schneidfläche des Schneidbretts im Randbereich der Schmalseiten und wenigstens im Randbereich einer an die Schmalseite angrenzenden Breitseite Längsnuten auf, so ist sichergestellt, dass die während des Schneideprozesses aus dem Schnittgut austretende Flüssigkeit nicht unkontrolliert von der Schneidfläche abfließen kann. Im einfachsten Fall bilden die untereinander verbundenen Längsnuten eine U-förmige Saftrinne.

Vorzugsweise sind an den Unterseiten der Abstandselemente Fuß- bzw. Stützelemente angeordnet, so dass ein sicherer und rutschfester Stand des Schneidbretts auf diversen Oberflächen gewährleistet ist. Denkbar ist zudem, dass die Fuß- bzw. Stützelemente höhenverstellbar ausgeführt sind, so dass vorteilhaft in den unteren Führungsnuten tiefer dimensionierte Auffangbehälter gelagert werden können.

Um den verschiedensten praktischen und ästhetischen Einsatzzwecken gerecht zu werden, kann das erfindungsgemäße Schneidbrett und/oder die Abstandselemente aus Holz, Kunststoff, Glas, Keramik, Stein oder Metall hergestellt sein.

In einer vorteilhaften Weiterbildung der Erfindung ist der wenigstens eine in den an die Unterseite der Schneidfläche angrenzenden Führungsnuten verschiebbar gelagerte Auffangbehälter im Bodenbereich siebartig und der in den darunterliegenden Führungsnuten verschiebbar gelagerte Auffangbehälter im Bodenbereich verschlossen ausgebildet, so dass das geschnittene Schnittgut, wie z.B. Gemüse, Obst, in den oberen Auffangbehälter befördert wird und der weiterhin austretende Saft durch den siebartig ausgebildeten Bodenbereich austreten und vom im darunter liegenden Auffangbehälter aufgenommen werden kann.

Weitere vorteilhafte Ausgestaltungen der Erfindung sind Gegenstand weiterer Unteransprüche und werden nachfolgend anhand von Zeichnungen näher erläutert.

Im Folgenden werden mit Verweis auf die Figuren bevorzugte Ausführungsbeispiele der Erfindung dargestellt. Es zeigen:
- Figur 1: eine erste schematisch dargestellte Ausführungsform des erfindungsgemäßen Schneidbretts in perspektivischer Ansicht,
- Figur 2: eine weitere schematisch dargestellte Ausführungsform des Schneidbretts in perspektivischer Ansicht.

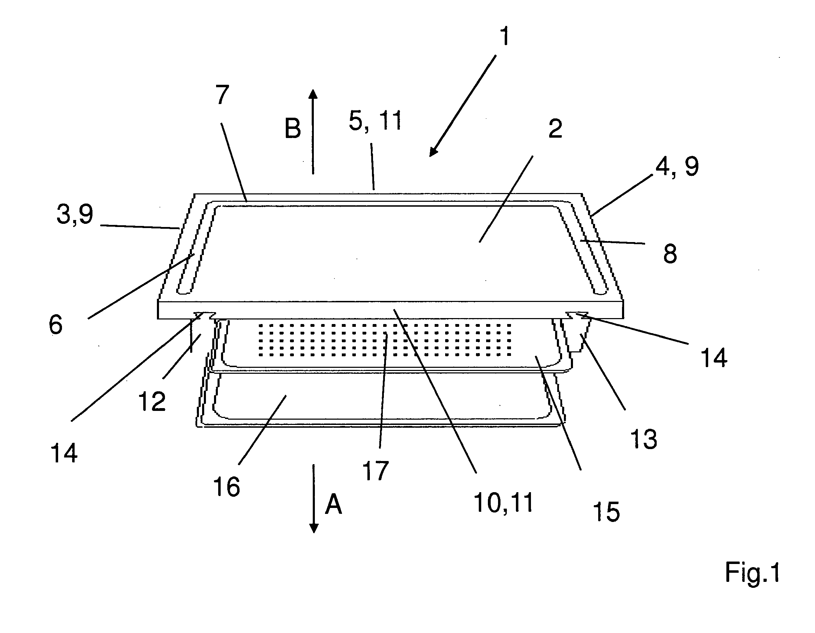

Figur 1 zeigt eine erste schematisch dargestellte Ausführungsform des erfindungsgemäßen Schneidbretts 1 in perspektivischer Ansicht. Das Schneidbrett 1 umfasst eine rechteckig ausgebildete Schneidfläche 2. Die Schneidfläche 2 ist vollflächig und glatt ausgebildet und weist im Randbereich ihrer Schmalseiten 3, 4 und im Randbereich der oberen Breitseite 5 untereinander verbundene Saftrinnen 6, 7, 8 auf. Diese Saftrinnen 6, 7, 8 sind muldenartig ausgeführt, bilden eine U-Form und dienen dazu, dass über den Schneidflächenrand 9 der Schmalseiten 3, 4 bzw. über den Schneidflächenrand 11 der oberen Breitseite 5 der Schneidfläche 2 Flüssigkeit nicht ungehindert abfließen kann, die beim Schneidevorgang aus dem Schnittgut, wie z.B. Obst, Gemüse oder Fleisch, austreten kann.

Im Randbereich der unteren Breitseite 10 der Schneidfläche 2 ist dagegen keine Saftrinne vorgesehen, um die Beförderung des Schnittguts bzw. des Abfalls über den Schneidflächenrand 11 der unteren Breitseite 10 der Schneidfläche 2 nicht zu behindern. Unterhalb der Schmalseiten 3, 4 der Schneidfläche 2 sind, parallel zu einander beabstandet, die Schneidfläche 2 erhöhenden Abstandselemente 12, 13 angeordnet.

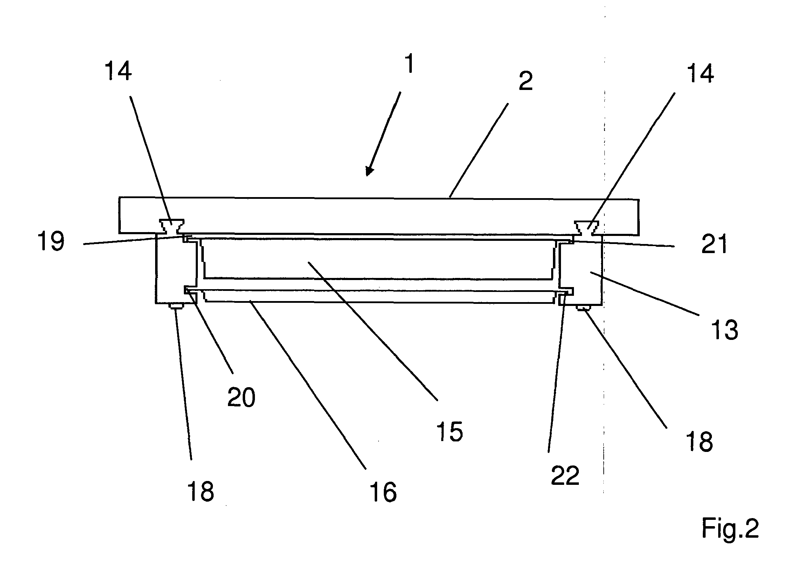

Die Abstandselemente 12, 13 sind über eine Verbindung, vorzugsweise mit einer Schwalbenschwanzverbindung 14 lösbar mit der Unterseite der Schneidfläche 2 verbunden und weisen in Figur 2 noch näher darzustellende Führungsnuten auf, in denen ein erster und ein zweiter Aufnahmebehälter 15, 16 verschiebbar gelagert sind. Dadurch, dass die Befüllung insbesondere über die Breitseite 5, 10 der Schneidfläche 2 erfolgt, kann eine gegenüber der Befüllung der Auffangbehälter 15, 16 über die Schmalseiten 3, 4 der Schneidfläche 2 gleichmäßigere Befüllung der Auffangbehälter 15, 16 erfolgen, so dass weniger Schnittgut beim Befördern des Schnittguts von der Schneidfläche 2 neben dem Auffangbehälter 15 fällt. Denkbar ist zudem, dass die Abstandselemente 12, 13 über nicht dargestellte Steckverbindungen oder dergleichen mit der Schneidfläche 2 verbunden sind.

Zwischenrasterungen in den Führungsnuten sind nicht vorgesehen, so dass die Entnahme der Auffangbehälter 15, 16 aus den Führungsnuten, auch bei voll beladenen Auffangbehältern 15, 16 ohne ein Verschütten möglich ist. Die Auffangbehälter 15, 16 sind zu den mit den Pfeilen A und B angedeuteten Breitseiten 5, 10 des Schneidbretts 1 teilweise oder vollkommen herausziehbar. Die Größe der in den Führungsnuten verschiebbar gelagerten Auffangbehälter 15, 16 ist durch den Abstand der Führungsnuten zueinander in der Länge fest vorgegeben, jedoch ist die Breite variabel wählbar, so dass in den jeweiligen sich gegenüberliegenden Führungsnuten nicht nur ein Auffangbehälter 15, 16, sondern auch mehrere, vorzugsweise jeweils zwei separate Auffangbehälter 15, 16 gelagert werden können. Im Weiteren kann das Fassungsvermögen der jeweiligen Auffangbehälter in Abhängigkeit vom Höhenabstand der Führungsnuten verschiedene Dimensionen aufweisen. In der Regel ist in den jeweiligen Führungsnuten ein Auffangbehälter 15, 16 gelagert, der derart dimensioniert ist, dass er von der Schneidfläche 2 vollflächig abgedeckt ist, so dass vorteilhaft ein Auffangbehälter 15, 16 zur Aufnahme von fertigen Schnittgut und der andere Auffangbehälter 15, 16 zur Aufnahme von Abfall dient. Im dargestellten Ausführungsbeispiel ist der obere Auffangbehälter 15 teilweise aus den Führungsnuten herausgezogen, so dass das fertige Schnittgut über den Schneidflächenrand 11 in den herausgezogenen Auffangbehälter 15 befördert werden kann. Der obere Auffangbehälter 15 ist im Bodenbereich 17 siebartig ausgeführt, damit die aus dem Schnittgut austretende Flüssigkeit durch den Bodenbereich in den darunter angeordneten flacher dimensionierten Auffangbehälter 16 abfließen kann. Besonders vorteilhaft ist eine solche Ausführungsform, wenn der Abstand der jeweiligen Führungsnuten in der Höhe und in der Breite derart gewählt ist, dass handelsübliche Garbehälter, wie sie beispielsweise in einem Dampfgarer Verwendung finden, als Auffangbehälter 15, 16 unterhalb der Schneidfläche 2 genutzt werden können. Der Auffangbehälter 15, 16 bzw. Garbehälter mit dem Schnittgut kann dann zur weiteren Verarbeitung direkt in das nicht dargestellte Hausgerät befördert werden, ohne dass vom Benutzer weitere Zwischenschritte, wie das ansonsten notwendige Umfüllen des fertigen Schnittguts vom Auffangbehälter 15, 16 in einen entsprechenden Garbehälter, notwendig sind. Die im unteren und flacher ausgeführten Auffangbehälter 16 aufgefangene Flüssigkeit kann dann vom Benutzer durch Herausziehen des Auffangbehälters bequem entsorgt werden. Die Auffangbehälter 15, 16 bestehen vorzugsweise aus Kunststoff oder Metall. Die Schneidfläche 2 weist an den Schmalseiten 3, 4 einen Überstand zu den darunter liegenden Abstandselementen 12, 13 auf, so dass zusätzlich unter den Schneidflächenrändern 9, 11 der Schmalseiten 3, 5 weitere hier nicht dargestellte Auffangbehälter zur Aufnahme von Schnittgut oder Abfall platziert werden können. Denkbar ist auch, dass der Überstand nicht vorhanden ist.

Um den verschiedensten praktischen und ästhetischen Einsatzzwecken gerecht zu werden, können das erfindungsgemäße Schneidbrett 1 und/oder die Abstandselemente 12, 13 aus Holz, Kunststoff, Glas, Keramik, Stein oder Metall hergestellt sein.

Figur 2 zeigt eine weitere schematisch dargestellte Ausführungsform des Schneidbretts 1 in perspektivischer Ansicht. Die die Schneidfläche 2 erhöhenden Abstandselemente 12, 13 sind über eine Schwalbenschwanzverbindung 14 lösbar mit dieser verbunden. Unterhalb der Abstandselemente 12, 13 sind wenigstens im jeweiligen Endbereich Fuß- bzw. Stützelemente 18 angeordnet, so dass ein sicherer und rutschfester Stand des Schneidbretts 1 auf diversen Oberflächen gewährleistet ist. Das erste Paar sich parallel gegenüberliegender Führungsnuten 19, 21 ist direkt unterhalb der Schneidfläche 2 angeordnet. Die zwei weiteren Führungsnuten 20,22 befinden sich beabstandet im unteren Randbereich der Abstandselemente 12, 13. Die Führungsnuten 19, 20, 21, 22 sind vorliegend in die Abstandselemente eingefräst worden. Denkbar ist es auch, separate Führungsschienen an den Abstandselementen 12, 13 zu montieren, in denen die Auffangbehälter 15, 16 verschiebbar gelagert sind.

Es liegt im Rahmen des Könnens eines Fachmanns, die beschriebenen Ausführungsbeispiele in nicht dargestellter Weise abzuwandeln, um die dargestellten Effekte zu erzielen, ohne dabei den Rahmen der Erfindung zu verlassen.

### Bezugszeichen:

- 1: Schneidbrett
- 2: Schneidfläche
- 3: Schmalseite
- 4: Schmalseite
- 5: obere Breitseite
- 6: Saftrinne
- 7: Saftrinne
- 8: Saftrinne
- 9: Schneidflächenrand
- 10: untere Breitseite
- 11: Schneidflächenrand
- 12: Abstandselement
- 13: Abstandselement
- 14: Schwalbenschwanzverbindung
- 15: Auffangbehälter
- 16: Auffangbehälter
- 17: Bodenbereich
- 18: Fuß- bzw. Stützelemente
- 19: Führungsnut
- 20: Führungsnut
- 21: Führungsnut

- 22: Führungsnut

## Patentansprüche

1. Schneidbrett (1) für Haushaltszwecke bestehend aus einer Schneidfläche (2) mit wenigstens zwei unterhalb der Schmalseiten (3, 4) der Schneidfläche (2) angeordneten die Schneidfläche (2) zur Auflagefläche erhöhenden Abstandselementen (12,13) und mit wenigstens einem unterhalb der Schneidfläche (2) angeordneten in Führungsnuten (19, 20, 21, 22) der Abstandselemente verschiebbar gelagerten Auffangbehälter (15, 16)
**dadurch gekennzeichnet,**
**dass** die Abstandselemente (12, 13) jeweils zwei Führungsnuten (19, 20, 21, 22) aufweisen, wobei zwischen den jeweiligen sich gegenüberliegenden Führungsnuten (19, 21 und 20, 22) wenigstens jeweils ein Auffangbehälter (15, 16) verschiebbar gelagert werden kann, und wobei die Führungsnuten in einem solchen Abstand zueinander angeordnet und ausgebildet sind, standardisierte, handelsübliche Garbehälter als Auffangbehälter (15, 16) aufzunehmen.

2. Schneidbrett (1) für Haushaltszwecke nach Anspruch 1,
**dadurch gekennzeichnet,**
**dass** die jeweils zwei sich gegenüberliegenden Führungsnuten (19, 20, 21, 22) zur Aufnahme von wenigstens einem Auffangbehälter (15, 16) in paralleler Richtung zur Schneidfläche (2) verlaufen.

3. Schneidbrett (1) für Haushaltszwecke nach Anspruch 1,
**dadurch gekennzeichnet,**
**dass** die Auffangbehälter (15, 16) von dem Schneidbrett (1) vollständig entkoppelbar sind.

4. Schneidbrett (1) für Haushaltszwecke nach wenigstens einem der vorhergehenden Ansprüche,
**dadurch gekennzeichnet,**
**dass** das Fassungsvermögen der jeweiligen Auffangbehälter in Abhängigkeit vom Höhenabstand der Führungsnuten (19, 20, 21, 22) verschiedene Dimensionen aufweisen kann.

5. Schneidbrett (1) für Haushaltszwecke nach wenigstens einem der vorhergehenden Ansprüche,
**dadurch gekennzeichnet,**
**dass** die in den Führungsnuten (19, 21 und 20, 22) aufgenommenen Auffangbehälter (15, 16) zu den Breitseiten (5, 10) des Schneidbretts (1) teilweise oder vollkommen herausziehbar sind.

6. Schneidbrett (1) für Haushaltszwecke nach wenigstens einem der vorhergehenden Ansprüche,
**dadurch gekennzeichnet,**
**dass** die Führungsnuten (19, 20, 21, 22) ausgebildet sind, standardisierte in handelsüblichen Haushaltgeräten, insbesondere Dampfgarern Verwendung findende Garbehälter (15, 16) aufzunehmen.

7. Schneidbrett (1) für Haushaltszwecke nach wen igstens einem der vorhergehenden Ansprüche,
**dadurch gekennzeichnet,**
**dass** die Abstandselemente (12, 13) lösbar mit der Schneidfläche (2) verbunden sind.

8. Schneidbrett (1) für Haushaltszwecke nach wenigstens einem der vorhergehenden Ansprüche,
**dadurch gekennzeichnet,**
**dass** die Abstandselemente (12, 13) mittels einer Schwalbenschwanzverbindung (14) mit der Schneidfläche (2) verbunden sind.

9. Schneidbrett (1) für Haushaltszwecke nach wenigstens einem der vorhergehenden Ansprüche,
**dadurch gekennzeichnet,**
**dass** die Schneidfläche (2) im Randbereich der Schmalseiten (3, 4) und wenigstens im Randbereich einer an die Schmalseite (3, 4) angrenzenden Breitseite (5, 10) Längsnuten aufweist.

10. Schneidbrett (1) für Haushaltszwecke nach wenigstens einem der vorhergehenden Ansprüche,
**dadurch gekennzeichnet,**
**dass** die Längsnuten untereinander verbunden sind und eine U-Form bilden.

11. Schneidbrett (1) für Haushaltszwecke, nach wenigstens einem der vorhergehenden Ansprüche,
**dadurch gekennzeichnet,**
**dass** an den Unterseiten der Abstandselemente (12, 13) Fuß- bzw. Stützelemente (18) angeordnet sind.

12. Schneidbrett (1) für Haushaltszwecke nach wenigstens einem der vorhergehenden Ansprüche,
**dadurch gekennzeichnet,.**
**dass** das Schneidbrett (1) und/oder die Abstandselemente (12, 13) aus Holz, Kunststoff, Glas, Keramik, Stein oder Metall hergestellt sind.

13. Schneidbrett (1) für Haushaltzwecke nach wenigstens einem der vorhergehenden Ansprüche,
**dadurch gekennzeichnet,**
**dass** der wenigstens eine, in den an die Schneidfläche (2) angrenzende Führungsnuten (19, 21 verschiebbar gelagerte Auffangbehälter (15) im Bodenbereich (17) flüssigkeitsdurchlässig und der in den weiteren Führungsnuten (20, 22) gelagerte Auffangbehälter (16) flüssigkeitsundurchlässig ausgebildet ist.

## Claims

1. Cutting board (1) for domestic use, consisting of a cutting surface (2) having at least two spacer elements (12, 13) arranged below the shorter sides (3, 4) of the cutting surface (2) and raising the cutting surface (2) relative to the supporting surface, and having at least one collecting vessel (15, 16) which is displaceably mounted in the guide grooves (19, 20, 21, 22) of the spacer elements and is arranged below the cutting surface (2),
**characterised in that**
the spacer elements (12, 13) each have two guide grooves (19, 20, 21, 22), in each case, it being possible for at least one collecting vessel (15, 16) to be displaceably mounted between the opposing guide grooves (19, 21 and 20, 22), and the guide grooves being arranged and formed so as to have such distance between them as to be able to accommodate standardised, commercially available cooking vessels as collecting vessels (15, 16).

2. Cutting board (1) for domestic use according to claim 1,
**characterised in that**,
in each case, the opposing guide grooves (19, 20, 21, 22) extend in parallel with the cutting surface (2) in order to accommodate at least one collecting vessel (15, 16).

3. Cutting board (1) for domestic use according to claim 1,
**characterised in that**
the collecting vessels (15, 16) can be fully detached from the cutting board (1).

4. Cutting board (1) for domestic use according to at least one of the preceding claims,
**characterised in that**
the capacity of the respective collecting vessels can vary depending on the height of the guide grooves (19, 20, 21, 22).

5. Cutting board (1) for domestic use according to at least one of the preceding claims,
**characterised in that**
the collecting vessels (15, 16) accommodated in the guide grooves (19, 21 and 20, 22) can be slid out in part or in full towards the longer sides (5, 10) of the cutting board (1).

6. Cutting board (1) for domestic use according to at least one of the preceding claims,
**characterised in that**
the guide grooves (19, 20, 21, 22) are formed so as to accommodate standardised cooking vessels (15, 16) which are used in commercially available domestic appliances, in particular those used in steam cooking.

7. Cutting board (1) for domestic use according to at least one of the preceding claims,
**characterised in that**
the spacer elements (12, 13) are removably connected to the cutting surface (2).

8. Cutting board (1) for domestic use according to at least one of the preceding claims,
**characterised in that**
the spacer elements (12, 13) are connected to the cutting surface (2) by means of a dovetail joint.

9. Cutting board (1) for domestic use according to at least one of the preceding claims,
**characterised in that**
the cutting surface (2) has longitudinal grooves at the edge of the shorter sides (3, 4) and at least at the edge of one of the longer sides (5, 10) adjoining the shorter side (3, 4).

10. Cutting board (1) for domestic use according to at least one of the preceding claims,
**characterised in that**
the longitudinal grooves are interconnected and form a U-shape.

11. Cutting board (1) for domestic use according to at least one of the preceding claims,
**characterised in that**
feet or support elements (18) are arranged on the underside of the spacer elements (12, 13).

12. Cutting board (1) for domestic use according to at least one of the preceding claims,
**characterised in that**
the cutting board (1) and/or the spacer elements (12, 13) are made of wood, plastics material, glass, ceramics, stone or metal.

13. Cutting board (1) for domestic use according to at least one of the preceding claims,
**characterised in that**
the at least one collecting vessel (15) which is displaceably mounted in the guide grooves (19, 21) adjacent to the cutting surface (2) is permeable to liquid at the bottom (17), and the collecting vessel (16) mounted in the other guide grooves (20, 22) is impermeable to liquid.

## Revendications

1. Planche à découper (1) pour usages domestiques, composée d'une surface de découpe (2) avec au moins deux éléments d'écartement (12, 13) disposés sous les petits côtés (3, 4) de la surface de découpe (2) et rehaussant la surface de découpe (2) par rapport à la surface d'appui, et avec au moins un réceptacle (15, 16) disposé sous la surface de découpe (2) et supporté de façon coulissante dans des rainures de guidage (19, 20, 21, 22) des éléments d'écartement,
**caractérisé en ce que**
les éléments d'écartement (12, 13) présentent respectivement deux rainures de guidage (19, 20, 21, 22), au moins respectivement un réceptacle (15, 16) pouvant être supporté de façon coulissante entre les rainures de guidage (19, 20, 21, 22) respectivement opposées, et les rainures de guidage étant disposées et constituées avec un écart entre elles de nature à recevoir des bacs de cuissons standardisés du commerce en tant que réceptacle (15, 16).

2. Planche à découper (1) pour usages domestiques selon la revendication 1,
**caractérisée en ce que**
les deux rainures de guidage (19, 20, 21, 22) respectivement opposées sont placées dans une direction parallèle par rapport à la surface de découpe (2) pour recevoir au moins un réceptacle (15, 16).

3. Planche à découper (1) pour usages domestiques selon la revendication 1,
**caractérisée en ce que**
les réceptacles (15, 16) peuvent être entièrement découplés de la planche à découper (1).

4. Planche à découper (1) pour usages domestiques selon au moins une des revendications précédentes,
**caractérisée en ce que**
la contenance des réceptacles respectifs peut présenter des valeurs différentes en fonction de l'écartement en hauteur des rainures de guidage (19, 20, 21, 22).

5. Planche à découper (1) pour usages domestiques selon au moins une des revendications précédentes,
**caractérisée en ce que**
les réceptacles (15, 16) reçus dans les rainures de guidage (19, 21 et 20, 22) peuvent être extraits totalement ou partiellement vers les grands côtés (5, 10) de la planche à découper (1).

6. Planche à découper (1) pour usages domestiques selon au moins une des revendications précédentes,
**caractérisée en ce que**
les rainures de guidage (19, 20, 21, 22) sont constituées pour recevoir des réceptacles (15, 16) standardisés utilisés dans des appareils ménagers du commerce, en particulier des cuiseurs à vapeur.

7. Planche à découper (1) pour usages domestiques selon au moins une des revendications précédentes,
**caractérisée en ce que**
les éléments d'écartement (12, 13) sont raccordés de façon amovible à la surface de découpe (2).

8. Planche à découper (1) pour usages domestiques selon au moins une des revendications précédentes,
**caractérisée en ce que**
les éléments d'écartement (12, 13) sont raccordés à la surface de découpe (2) au moyen d'un assemblage en queue d'aronde (14).

9. Planche à découper (1) pour usages domestiques selon au moins une des revendications précédentes,
**caractérisée en ce que**,
dans la zone de bord des petits côtés (3, 4) et au moins dans la zone de bord d'un grand côté (5, 10) adjacent au petit côté (3, 4), la surface de découpe (2) présente des rainures longitudinales.

10. Planche à découper (1) pour usages domestiques selon au moins une des revendications précédentes,
**caractérisée en ce que**
les rainures longitudinales sont raccordées mutuellement et forment une forme en U.

11. Planche à découper (1) pour usages domestiques selon au moins une des revendications précédentes,
**caractérisée en ce que**
des éléments de pied ou respectivement d'appui (18) sont disposés sur les côtés inférieurs des éléments d'écartement (12, 13).

12. Planche à découper (1) pour usages domestiques selon au moins une des revendications précédentes,
**caractérisée en ce que**
la planche à découper (1) et/ou les éléments d'écartement (12, 13) sont fabriqués en bois, en matière plastique, en verre, en céramique, en pierre ou en métal.

13. Planche à découper (1) pour usages domestiques selon au moins une des revendications précédentes,
**caractérisée en ce que**
le réceptacle (15) au moins au nombre de un supporté de façon coulissante dans les rainures de guidage (19, 21) adjacentes à la surface de découpe (2) est constitué de façon perméable aux liquides dans la zone de fond (17), et le réceptacle (16) supporté dans les autres rainures longitudinales (20, 22) est constitué de façon imperméable aux liquides.
